(19) Europäisches Patentamt

European Patent Office

Office européen des brevets

(11) **EP 2 680 045 B1**

(12) **FASCICULE DE BREVET EUROPEEN**

(45) Date de publication et mention
de la délivrance du brevet:
**05.12.2018 Bulletin 2018/49**

(21) Numéro de dépôt: **13305824.8**

(22) Date de dépôt: **19.06.2013**

(51) Int Cl.:
***G01V 11/00*** *(2006.01)*     ***G01V 99/00*** *(2009.01)*

(54) **Procédé d'exploitation d'un reservoir geologique à partir d'un modèle de réservoir calé au moyen d'un parametrage multi-echelles**

Verfahren zur Ausbeutung eines geologischen Reservoirs mit Hilfe eines Reservoirmodells, das auf einer Multiskalen-Parametrierung basiert wird

Method for exploiting a geological reservoir using a reservoir model matched by means of multi-scale parameterisation

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **26.06.2012 FR 1201810**

(43) Date de publication de la demande:
**01.01.2014 Bulletin 2014/01**

(73) Titulaire: **IFP Energies nouvelles**
**92500 Rueil-Malmaison (FR)**

(72) Inventeurs:
• **Gardet, Caroline**
**92600 ASNIERES-SUR-SEINE (FR)**
• **Le Ravalec, Mickaele**
**92500 RUEIL MALMAISON (FR)**

(74) Mandataire: **IFP Energies nouvelles**
**Rond-point de l'échangeur de Solaize**
**BP3**
**69230 Solaize (FR)**

(56) Documents cités:
**EP-A1- 1 637 904        GB-A- 2 390 714**
**US-A1- 2005 234 690**

• **TRAN T T ET AL: "Efficient conditioning of 3D fine-scale reservoir model to multiphase production data using streamline-based coarse-scale inversion and geostatistical downscaling", SPE ANNUAL TECHNICAL CONFERENCE AND EXHIBITION, XX, XX, no. 56518, 3 octobre 1999 (1999-10-03), pages 1-13, XP002186718,**

## Description

La présente invention concerne le domaine technique de l'industrie pétrolière, et plus particulièrement l'exploitation de réservoirs souterrains, tels que des réservoirs pétroliers ou des sites de stockage de gaz.

En particulier, l'invention permet de modifier des représentations du réservoir, appelées modèles de réservoir, pour les rendre cohérentes avec les différentes données collectées sur le terrain.

L'optimisation et l'exploitation d'un gisement pétrolier reposent sur une description aussi précise que possible de la structure, des propriétés pétrophysiques, des propriétés des fluides, etc., du gisement étudié. Pour ce faire, les spécialistes utilisent un outil qui permet de rendre compte de ces aspects de façon approchée : le modèle de réservoir. Un tel modèle constitue une maquette du sous-sol, représentative à la fois de sa structure et de son comportement. Généralement, ce type de maquette est représenté sur un ordinateur, et l'on parle alors de modèle numérique. Un modèle de réservoir comporte un maillage ou grille, généralement tridimensionnel, associé à une ou plusieurs cartes de propriétés pétrophysiques (faciès, porosité, perméabilité, saturation...). L'association consiste à attribuer des valeurs de ces propriétés pétrophysiques à chacune des mailles de la grille.

Ces modèles bien connus et largement utilisés dans l'industrie pétrolière, permettent de déterminer de nombreux paramètres techniques relatifs à l'étude ou l'exploitation d'un réservoir, d'hydrocarbures par exemple. En effet, puisque le modèle de réservoir est représentatif de la structure du réservoir et de son comportement, l'ingénieur l'utilise par exemple pour déterminer les zones qui ont le plus de chances de contenir des hydrocarbures, les zones dans lesquelles il peut être intéressant/nécessaire de forer un puits d'injection ou de production pour améliorer la récupération des hydrocarbures, le type d'outils à utiliser, les propriétés des fluides utilisés et récupérés.... Ces interprétations de modèles de réservoir en termes de « paramètres techniques d'exploitation » sont bien connues des spécialistes. De la même façon, la modélisation des sites de stockages de $CO_2$ permet de surveiller ces sites, de détecter des comportements inattendus et de prédire le déplacement du $CO_2$ injecté.

Un modèle de réservoir a donc pour vocation de rendre compte, au mieux, de toutes les informations connues sur un réservoir. Un modèle de réservoir est représentatif lorsqu'une simulation de réservoir fournit des réponses numériques très proches des données d'historique déjà observées. On appelle données d'historique, les données de production issues de mesures aux puits en réponse à la production du réservoir (production 4D dans une ou plusieurs régions, etc.). Une simulation de réservoir est une technique permettant de simuler les écoulements de fluides au sein d'un réservoir au moyen d'un logiciel appelé simulateur d'écoulement.

Pour ce faire, l'intégration de toutes les données disponibles est indispensable. Ces données comprennent en général :

- des mesures en certains points de la formation géologique de la propriété modélisée, par exemple dans des puits. Ces données sont dites statiques car elles sont invariables dans le temps (à l'échelle des temps de la production du réservoir) et sont directement liées à la propriété d'intérêt.

- des "données d'historique", comprenant des données de production, par exemple les débits de fluide mesurés aux puits, les concentrations de traceurs et des données issues de campagnes d'acquisition sismique répétées à des temps successifs. Ces données sont dites dynamiques car elles évoluent en cours d'exploitation et sont indirectement liées aux propriétés attribuées aux mailles du modèle de réservoir.

Les données statiques disponibles sont utilisées pour définir des fonctions aléatoires pour chaque propriété pétrophysique comme la porosité ou la perméabilité. Une représentation de la répartition spatiale d'une propriété pétrophysique est une réalisation d'une fonction aléatoire. De façon générale, une réalisation est générée à partir d'une part d'une moyenne, d'une variance et d'une fonction de covariance qui caractérise la variabilité spatiale de la propriété étudiée et d'autre part d'un germe ou d'une série de nombres aléatoires. De nombreuses techniques de simulation existent comme la méthode de simulation séquentielle par Gaussiennes, la méthode de Cholesky ou encore la méthode FFT-MA (transformée de Fourier rapide avec moyenne mobile) ou la méthode décrite dans la demande EP 1637904. Les documents suivants décrivent de telles méthodes :

- Goovaerts, P., 1997, Geostatistics for natural resources evaluation, Oxford Press, New York, 483 p.

- Le Ravalec, M., Noetinger B., and Hu L.-Y., 2000, The FFT moving average (FFT-MA) generator: an efficient numerical method for generating and conditioning Gaussian simulations, Mathematical Geology, 32(6), 701-723.

Les techniques d'intégration des données dynamiques (production et/ou sismique 4D) dans un modèle de réservoir sont bien connues des spécialistes : ce sont des techniques dites de "calage d'historique" ("history-matching" en anglais). Le calage d'historique consiste à modifier les paramètres d'un modèle de réservoir, tels que les perméabilités, les porosités ou les skins de puits (représentant les endommagements autour du puits), les connections de failles..., pour minimiser les écarts entre les données d'historique mesurées et les réponses correspondantes simulées à partir du modèle au moyen d'un simulateur d'écoulement. Les paramètres peuvent être liés à des régions géographiques comme les perméabilités ou porosités autour d'un ou plusieurs puits. L'écart entre données réelles et réponses simulées forme une fonctionnelle, dite fonction objectif. Le problème du calage d'historique se résout en minimisant cette fonctionnelle. Des techniques de perturbation du modèle de réservoir permettent de modifier une réalisation d'une fonction aléatoire tout en assurant le fait que la réalisation perturbée est aussi une réalisation de cette même fonction aléatoire. Parmi ces techniques de perturbation, on peut citer la méthode des points pilotes développée par RamaRao et al. (1995) et Gomez-Hernandez et al. (1997), la méthode des déformations graduelles proposée par Hu (2000) et la méthode de perturbation des probabilités introduite par Caers (2003) ou la méthode décrite dans la demande GB 2390714. Ces méthodes permettent de modifier la distribution spatiale des hétérogénéités :

- RamaRao, B.S, Lavenue, A.M., Marsilly, G. de, Marietta, M.G., 1995, Pilot point methodology for automated calibration of an ensemble of conditionally simulated transmissivity fields. 1. Theory and computational experiments. WRR, 31 (3), 475-493.

- Gomez-Hernandez, J., Sahuquillo, A., et Capilla, J.E., 1997, Stochastic simulation of transmissivity fields conditional to both transmissivity and piezometric data, 1. Theory, J. of Hydrology, 203, 162-174.

- Hu, L-Y., 2000, Graduai Déformation and iterative calibration of Gaussian-related stochastic models, Math. Geol., 32(1), 87-108.

- Caers, J., 2003, Geostatistical history matching under training-image based geological constraints. SPE J. 8(3), 218-226.

Les formations géologiques sont très hétérogènes du fait de phénomènes de formation complexes combinant des processus de migration, d'érosion et de dépôt. On peut ainsi observer, à grande échelle, des couches, des chenaux, des lobes, des barres, des méandres... A l'intérieur même de ces objets géologiques, des signes d'hétérogénéité se manifestent encore avec, par exemple, des phénomènes d'accrétion latérale ou des faisceaux à litage oblique. A l'échelle de l'échantillon de roche, la perméabilité varie également à cause de changements au niveau des contacts entre grains, de la taille des grains, de la densité des fissures... Par ailleurs, les données statiques et dynamiques utilisées pour contraindre le modèle géologique sont associées à des échelles différentes ainsi qu'à des niveaux de résolution différents. Les mesures sur échantillons permettent d'appréhender l'hétérogénéité à l'échelle sub-centimétrique, les diagraphies à l'échelle de la dizaine de centimètres et les données de production à une échelle comparable à la distance entre puits. Par conséquent, pour être représentatif du réservoir géologique, il est avantageux d'utiliser des techniques de paramétrage multi-échelles, ce qui permet d'apporter des modifications au modèle géologique à différentes échelles adapté au niveau de résolution de l'information à incorporer.

Une première approche a été proposée pour répondre à ce besoin. Elle implique les étapes suivantes : la génération d'un modèle géologique à l'échelle fine, une mise à l'échelle dite "upscaling" de ce modèle conduisant à un modèle de réservoir à l'échelle grossière, les simulations d'écoulement et la résolution du problème inverse à l'échelle grossière, et finalement une étape de mise à l'échelle descendante, aussi appelée "downscaling", pour transformer le modèle de réservoir grossier en modèle géologique fin. Une telle méthode est décrite dans le document :

- Tran, T.T., Wen, X.-H., Behrens, R.A., 1999, Efficient conditioning of 3D fine-scale reservoir model to multiphase production data using streamline-based coarse-scale inversion and geostatistical downscaling, SPE ATCE, Houston, TX, USA, SPE 56518.

Deux points sont à souligner. Tout d'abord, le processus de mise à l'échelle des perméabilités du modèle fin vers le modèle grossier, encore appelé "upscaling", s'appuie sur une moyenne arithmétique, ce qui est inadapté pour les perméabilités. Ensuite, l'étape de calage à l'échelle grossière nécessite la génération de modèles à l'échelle grossière ce qui est fait en considérant un variogramme approché pour décrire la variabilité spatiale de la perméabilité. On note que la dernière étape de mise à l'échelle de l'échelle grossière vers l'échelle fine est effectuée soit à partir d'une approche bayésienne, soit à partir de l'algorithme de simulation séquentielle par Gaussiennes combinée à un cokrigeage. L'inconvénient majeur de cette méthode est que le modèle obtenu à l'échelle fine après calage ne respecte pas les données dynamiques.

Une approche par calages imbriqués a été avancée pour corriger cet effet. Cette approche est décrite dans le document suivant :

- Aanonsen, S.I., Eydinov, D., 2006, A multiscale method for distributed parameter estimation with application to reservoir history matching, Comput. Geosci., 10, 97-117.

Il s'agit alors de soumettre le modèle obtenu après "downscaling" à une nouvelle phase de calage. On a alors une première étape de calage à l'échelle grossière avec des simulations d'écoulement à l'échelle grossière et une seconde étape de calage à l'échelle fine avec des simulations d'écoulement à l'échelle fine. Par conséquent, le temps de simulation nécessaire pour cette méthode est élevé. Comme pour les travaux précédemment mentionnés, "l'upscaling" est réalisé à partir d'une moyenne arithmétique, ce qui est inapproprié pour la perméabilité par exemple, tandis que le "downscaling" fait intervenir soit une interpolation, soit un cokrigeage. En outre, toutes les approches proposées ne s'appliquent qu'à des propriétés pétrophysiques continues. Elles ne répondent pas au problème du calage des modèles en faciès, qui est une propriété discrète.

L'invention concerne un procédé d'exploitation d'un réservoir géologique selon un schéma d'exploitation défini à partir d'un modèle de réservoir. Le modèle de réservoir est construit et paramétré pour au moins deux échelles différentes, les modèles de réservoir aux échelles les plus fines (avec le plus de mailles) étant contraints par les modèles de réservoir aux échelles les plus grossières (avec le moins de mailles). Ainsi on peut intégrer les données à différentes échelles suivant les niveaux de résolution en jeu et le modèle construit est cohérent au sens où la cohérence physique entre les modèles géologiques fins et les modèles de réservoir grossiers est préservée. En outre, le processus de calage est adapté aussi bien pour les propriétés continues que les propriétés discrètes. Le procédé est également économique, au sens où le nombre de paramètres à modifier pour intégrer les données peut être considérablement réduit par rapport au nombre de mailles du modèle géologique fin, ce qui implique une limitation significative des appels au simulateur d'écoulement et donc un gain en termes de temps de calcul.

**Le procédé selon l'invention**

L'invention concerne un procédé d'exploitation d'un réservoir géologique selon un schéma d'exploitation défini à partir d'un modèle de réservoir, ledit modèle de réservoir comportant un maillage associé à au moins un paramètre dudit réservoir, dans lequel on mesure des données statiques au sein du réservoir et on acquiert des données dynamiques en cours d'exploitation. Pour ce procédé, on réalise les étapes suivantes :

a) on construit par ordinateur ledit modèle de réservoir au moyen des étapes suivantes :

i) on génère de manière stochastique en fonction desdites données statiques un premier modèle de réservoir initial $MR1_0$ constitué d'un premier maillage comprenant $N_1$ mailles et au moins un deuxième modèle de réservoir initial $MR2_0$ constitué d'un deuxième maillage comprenant $N_2$ mailles, avec $N_2$ supérieur à $N_1$, la génération stochastique dudit deuxième modèle $MR2_0$ étant contrainte par la génération dudit premier modèle $MR1_0$ ;
ii) on réalise une mise à l'échelle du deuxième modèle MR2 vers un modèle de réservoir de simulation apte à être utilisé par un simulateur d'écoulement ;
iii) on détermine une fonction objectif mesurant un écart entre lesdites données dynamiques acquises et des données dynamiques simulées au moyen dudit modèle de réservoir de simulation et d'un simulateur d'écoulement ;
iv) on réitère les étapes ii) et iii) pour minimiser la fonction objectif après avoir modifié au moins un desdits modèles de réservoir MR1, MR2 et en appliquant la modification audit modèle non modifié ;

b) on détermine par ordinateur un schéma d'exploitation optimal du réservoir en simulant l'exploitation du réservoir au moyen dudit deuxième modèle de réservoir MR2 et dudit simulateur d'écoulement ; et
c) on exploite ledit réservoir en mettant en oeuvre ledit schéma d'exploitation optimal.

Selon l'invention, la valeur d'un paramètre en une maille i du premier modèle MR1 de réservoir correspond à la moyenne arithmétique dudit paramètre aux mailles du deuxième modèle MR2 de réservoir correspondant à la maille i du premier modèle de réservoir MR1.

Selon un mode de réalisation de l'invention, on génère ledit premier modèle $MR1_0$ au moyen d'un simulateur géostatistique.

Alternativement, on génère le premier modèle de réservoir initial $MR1_0$, en réalisant les étapes suivantes :

(1) on génère au moyen d'un simulateur géostatistique une première version du premier modèle de réservoir initial $MR1_0^0$ constitué d'un nombre $N_1$ de mailles;

(2) on détermine une fonction objectif mesurant un écart entre des données dynamiques acquises en cours d'exploitation et des données dynamiques simulées au moyen dudit premier modèle $MR1_0$ de réservoir et d'un simulateur d'écoulement ; et

(3) on réitère l'étape (2) pour minimiser la fonction objectif après avoir modifié ledit modèle de réservoir $MR1_0$.

Avantageusement, on génère ledit deuxième modèle $MR2_0$ de réservoir connaissant le premier modèle $MR1_0$ au moyen d'une simulation géostatistique intégrant un cokrigeage, ou d'une simulation séquentielle par Gaussienne avec cokrigeage, ou d'une méthode de simulations jointes ou d'une technique de processus Gaussien s'additionnant.

En outre, on génère lesdits premier et deuxième modèles de réservoir pour un paramètre discret, en utilisant en outre une méthode des Gaussiennes seuillées ou une méthode de plurigaussiennes.

Selon une variante de réalisation de l'invention, on génère ledit deuxième modèle $MR2_0$ de réservoir connaissant le premier modèle $MR1_0$ de réservoir au moyen d'une simulation séquentielle par Gaussienne avec cokrigeage en réalisant les étapes suivantes :

(1) on définit un chemin aléatoire pour visiter séquentiellement l'ensemble des $N_2$ mailles du deuxième maillage ;
(2) on attribue une valeur d'un paramètre pour chaque maille i dudit chemin en réalisant les étapes suivantes :

(a) on se place sur la première maille i dudit chemin ;
(b) on identifie le voisinage de ladite maille i dans les premier $MR1_0$ et deuxième $MR2_0$ modèles, et on détermine pour chaque modèle les mailles voisines dans lesquelles une valeur dudit paramètre a été attribuée ;
(c) on détermine une loi de probabilité conditionnelle dudit paramètre pour la maille i en fonction des valeurs dudit paramètre pour lesdites mailles voisines des premier $MR1_0$ et deuxième $MR2_0$ modèles ;
(d) on attribue une valeur du paramètre à ladite maille i par un tirage aléatoire à partir de ladite loi de probabilité conditionnelle ; et
(e) on passe à la maille suivante dudit chemin et on répète les étapes (b) à (d).

Selon une deuxième variante de réalisation de l'invention, on génère ledit deuxième modèle $MR2_0$ de réservoir connaissant le premier modèle $MR1_0$ de réservoir au moyen d'une simulation jointe en réalisant les étapes suivantes :

(1) on détermine une loi de probabilité conditionnelle du paramètre dans le deuxième modèle $MR2_0$ connaissant la valeur du paramètre dans le premier modèle $MR1_0$ ; et
(2) on simule une réalisation de ladite loi de probabilité conditionnelle au moyen d'un simulateur géostatistique en chaque maille dudit deuxième maillage.

Selon une troisième variante de réalisation de l'invention, on génère ledit deuxième modèle $MR2_0$ de réservoir connaissant le premier modèle $MR1_0$ de réservoir au moyen d'une technique de processus gaussien s'additionnant en réalisant les étapes suivantes :

(1) on définit une variable aléatoire $\varepsilon$ liant la réalisation stochastique d'un paramètre pour ledit premier modèle $MR1_0$ à la réalisation stochastique dudit paramètre pour ledit deuxième modèle $MR2_0$ ;
(2) on simule une réalisation de ladite variable aléatoire $\varepsilon$ au moyen d'un simulateur géostatistique ; et
(3) on additionne pour chaque maille i du deuxième maillage de réservoir la valeur de la réalisation de la variable aléatoire $\varepsilon$ en ladite maille i et la valeur du paramètre du premier modèle $MR1_0$ de réservoir pour la maille du premier maillage dans laquelle est incluse ladite maille i.

Avantageusement, on génère lesdits modèles avec des paramètres discrets au moyen d'une méthode de Gaussiennes seuillées en réalisant les étapes suivantes :

(1) on détermine la variance d'un paramètre dans le premier modèle $MR1_0$ de réservoir ;
(2) on définit les seuils du premier modèle $MR1_0$ de réservoir en fonction de ladite variance du paramètre ;
(3) on applique ces seuils à une variable stochastique continue dudit premier modèle de réservoir $MR1_0$ ; et
(4) on applique un seuillage aux valeurs dudit paramètre dans le deuxième modèle $MR2_0$ de réservoir au moyen de seuils définis à partir des proportions dudit paramètre.

Selon l'invention, on modifie au moins un desdits modèles de réservoir au moyen d'une méthode des points pilotes, ou d'une méthode de déformation graduelle ou d'une méthode de perturbation des probabilités.

De préférence, on modifie au moins un desdits modèles de réservoir au moyen d'une méthode de déformation graduelle en réalisant les étapes suivantes :

(1) dans l'étape de génération des modèles de réservoir :

(a) on génère de manière stochastique deux jeux de nombres aléatoires $Z_n^A$, $Z_n^B$ pour chaque modèle n de réservoir ;
(b) on définit un paramètre un paramètre de déformation $t_n$ pour chaque modèle de réservoir ;
(c) on génère chaque modèle de réservoir par combinaison des deux jeux de nombres aléatoires et en fonction dudit paramètre de déformation, de telle sorte que : $Z_{MRn_0} = \cos(t_n)Z_n^A + \sin(t_n)Z_n^B$ avec n l'indice indiquant le modèle de réservoir considéré et Z correspond à l'ensemble des nombres aléatoires d'un modèle, et ;

(2) dans l'étape de modification des modèles de réservoir, on modifie au moins un desdits paramètres de déformation $t_n$ et on construit les modèles de réservoir au moyen dudit paramètre de déformation $t_n$ en appliquant la formule :

$$Z_{MRn} = \cos(t_n)Z_n^A + \sin(t_n)Z_n^B.$$

De plus, la fonction objectif est déterminée au moyen de la méthode des moindres carrés.

De préférence, les paramètres incertains pour lesquels on construit le modèle de réservoir sont le faciès et/ou la porosité et/ou la perméabilité horizontale et/ou la perméabilité verticale.

Avantageusement, on génère les modèles de réservoir pour différentes paramètres en réalisant les étapes suivantes :

(1) on génère de manière stochastique une fonction aléatoire associée au faciès, en fonction de données statiques de mesures de faciès ;
(2) on génère de manière stochastique une fonction aléatoire associée à la porosité, en fonction de données statiques de porosité et à partir de ladite fonction aléatoire de faciès ;
(3) on génère de manière stochastique une fonction aléatoire associée à la perméabilité horizontale, à partir desdites fonctions aléatoires de faciès et de porosité ainsi qu'à partir de données statiques de perméabilité ; et
(4) on génère de manière stochastique une fonction aléatoire associée à la perméabilité verticale, à partir desdites fonctions aléatoires de faciès, de porosité et de perméabilité horizontale ainsi qu'à partir de données statiques de perméabilité.

L'invention concerne également un produit programme d'ordinateur selon la revendication 16.

## Présentation succincte des figures

D'autres caractéristiques et avantages du procédé selon l'invention, apparaîtront à la lecture de la description ci-après d'exemples non limitatifs de réalisations, en se référant aux figures annexées et décrites ci-après.

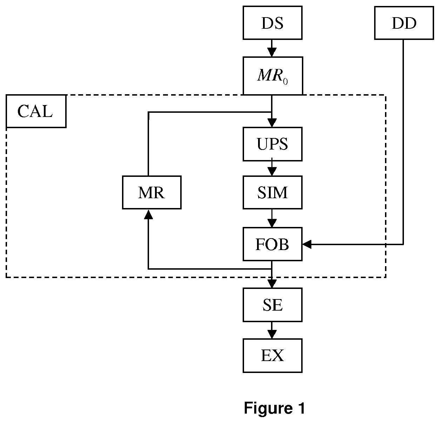

La figure 1 illustre les différentes étapes du procédé selon un premier mode de réalisation de l'invention.

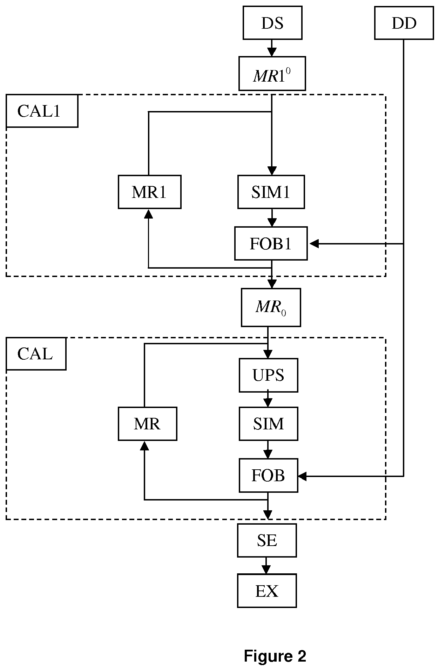

La figure 2 illustre les différentes étapes du procédé selon un deuxième mode de réalisation de l'invention.

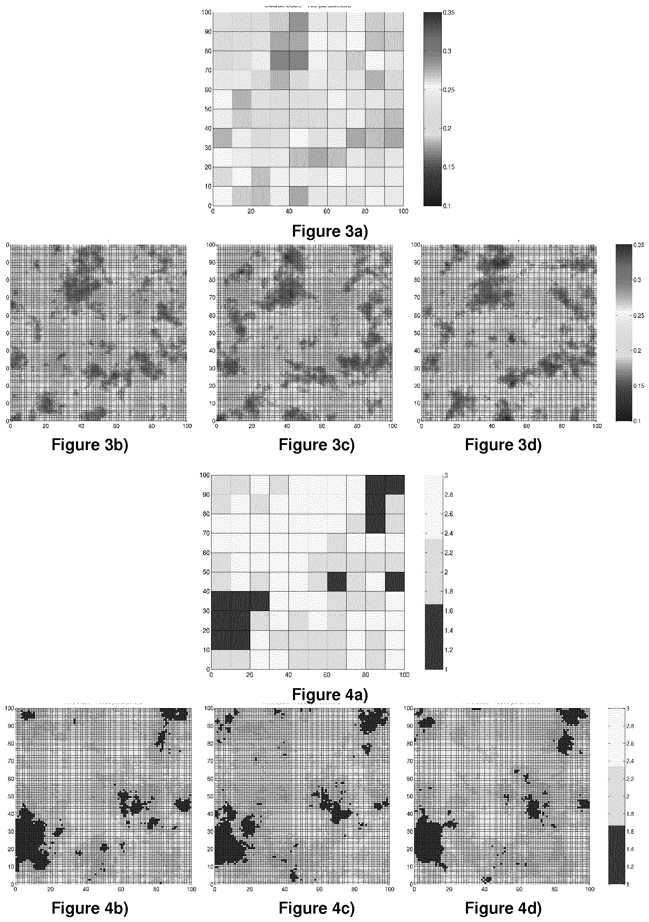

Les figures 3a) à 3d) représentent un exemple de générations de modèles pour deux échelles différentes pour un paramètre continu : la figure 3a) correspond au premier modèle à une échelle grossière (avec peu de mailles) et les figures 3b) à 3d) correspondent à trois deuxièmes modèles à une échelle fine (avec un nombre de mailles plus élevé).
Les figures 4a) à 4d) représentent un exemple de génération de modèles pour deux échelles différentes pour un paramètre discret : la figure 4a) correspond au premier modèle à une échelle grossière (avec peu de mailles) et les figures 4b) à 4d) correspondent à trois deuxièmes modèles à une échelle fine (avec un nombre de mailles plus élevé).

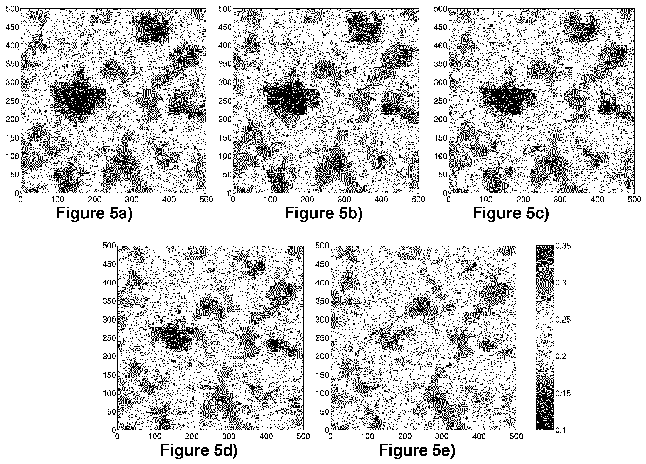

Les figures 5a) à 5e) illustrent des deuxièmes modèles de réservoir à l'échelle fine (avec un nombre de mailles plus élevé) lors d'une mise à jour du premier modèle de réservoir à l'échelle grossière (avec un nombre de mailles faible) par une méthode de déformation graduelle, le paramètre de déformation prenant successivement les valeurs 1 ; 0,9 ; 0,8 ; 0,7 et 0,5.

## Description détaillée de l'invention

L'invention concerne un procédé d'exploitation d'un réservoir géologique qui peut consister à l'exploitation d'un réservoir d'hydrocarbures ou d'un réservoir de stockage de gaz (par exemple de $CO_2$). L'exploitation du réservoir géologique est réalisée selon un schéma d'exploitation défini à partir d'un modèle de réservoir. Selon l'invention, le modèle de réservoir est rendu représentatif au moyen d'un paramétrage multi-échelles, c'est à dire avec au moins deux modèles de réservoir possédant un nombre différent de mailles.

La figure 1 représente les étapes du procédé selon l'invention. Pour ce procédé on génère les étapes suivantes :

1) génération des modèles de réservoir initiaux ($MR_0$) ;
2) calage des modèles de réservoir (CAL) ;
3) définition de schémas d'exploitation (SE) ; et
4) exploitation du réservoir (EX).

Étape 1) génération des modèles de réservoir initiaux ($MR_0$)

Les formations géologiques sont en général des milieux très hétérogènes. La modélisation d'un réservoir, c'est-à-dire la construction d'un modèle de réservoir représentatif du réservoir, nécessite de recourir à des procédés de construction dits « probabilistes » du fait de la limitation de l'information disponible (nombre de puits restreint, distance entre les puits...). De ce fait, les modèles géologiques construits à partir de ces procédés probabilistes sont appelés « modèles stochastiques ». La construction d'un modèle stochastique de réservoir doit d'abord dépendre de l'environnement du dépôt géologique, ce qui permet de représenter les hétérogénéités majeures qui contrôlent l'écoulement des fluides. L'intégration des données statiques dans ce modèle passe par des opérations linéaires et peut se faire à partir de techniques géostatistiques bien connues des spécialistes.

Un modèle de réservoir, représenté sur un ordinateur, consiste en une grille à N dimensions (N>0 et en général égal à deux ou trois) dont chacune des mailles se voit affecter la valeur d'une propriété caractéristique de la zone étudiée. Il peut s'agir par exemple de la porosité, de la perméabilité (horizontale ou verticale) ou des faciès. Ces valeurs constituent des cartes. Ainsi un modèle est une grille associée à au moins une carte.

Une propriété caractéristique de la zone étudiée est représentée par une variable aléatoire (V), qui peut être continue ou discrète. Une variable aléatoire est une variable qui peut prendre un certain nombre de réalisations suivant une certaine loi de probabilité. Les propriétés pétrophysiques comme la saturation, la porosité, ou la perméabilité sont associées à des variables continues tandis que les faciès, qui sont en nombre fini, sont associés à des variables discrètes.

Les réalisations d'une variable aléatoire fournissent des modèles stochastiques de réservoir. A partir de tels modèles, il est possible d'apprécier le mode de fonctionnement de la zone souterraine étudiée.

Afin de rendre représentatif le modèle de réservoir qui va être utilisé pour la définition de schémas d'exploitation, on réalise un paramétrage à plusieurs échelles. Pour cela, on utilise au moins deux modèles de réservoir, qu'on appelle alors premier et deuxième modèles de réservoir. Ce premier modèle MR1 est constitué d'un premier maillage comportant $N_1$ mailles, alors que le deuxième modèle MR2 est constitué d'un deuxième maillage comportant $N_2$ mailles, avec $N_2$ supérieur à $N_1$. De préférence, les mailles du deuxième maillage correspondent à une subdivision des mailles du premier maillage, on peut alors définir $N_2 = k^2 N_1$ avec k entier positif. Le premier modèle MR1 est considéré comme un modèle à une première échelle, dite grossière (avec un nombre de mailles réduit) et le deuxième modèle MR2 est considéré comme un modèle à une deuxième échelle, dite fine (avec un nombre de mailles élevés).

Lors de cette étape on génère un premier modèle $MR1_0$ initial et au moins un deuxième modèle $MR2_0$ initial. Ces modèles de réservoir initiaux ($MR_0$) sont construits en fonction de données statiques (DS) mesurées dans le réservoir. On génère dans un premier temps le premier modèle $MR1_0$ initial et ensuite, le deuxième modèle $MR2_0$ initial est contraint par le premier modèle $MR1_0$ initial.

Dans la suite de la description l'indice 1 est donné pour ce qui concerne le premier modèle de réservoir (dit à l'échelle grossière), et l'indice 2 correspond à ce qui concerne le deuxième modèle de réservoir (dit à l'échelle fine). Le deuxième modèle de réservoir MR2 est également appelé modèle géologique.

Ce paramétrage multi-échelles permet d'apporter des modifications au modèle géologique à différentes échelles suivant le niveau de résolution de l'information à incorporer.

Avantageusement, la valeur d'un paramètre en une maille i du premier modèle $MR1_0$ de réservoir correspond à la moyenne arithmétique dudit paramètre aux mailles du deuxième modèle $MR2_0$ de réservoir correspondant à la maille i du premier modèle de réservoir $MR1_0$.

De manière générale, on peut procéder de la façon suivante :

- Tout d'abord, on mesure sur le terrain des données statiques (diagraphies, mesures sur des échantillons prélevés dans les puits, sismique...).

- Puis, à partir des données statiques, on définit une deuxième variable aléatoire V2, caractérisée par une fonction de covariance (ou de façon analogue, par un variogramme), une variance et une moyenne. Cette variable aléatoire caractérise la propriété pétrophysique considérée à la deuxième l'échelle, dite échelle fine.

- On définit une première variable aléatoire V1 à partir de la moyenne arithmétique de la variable V2 sur les mailles du premier maillage. Comme la somme de variables aléatoires est une variable aléatoire, V1 est aussi une variable aléatoire.

- La covariance de la variable aléatoire V2 étant connue, on en déduit la covariance de la variable V1 à la première échelle, dite grossière et la covariance croisée de V1 et V2.

- Par ailleurs, on définit un ensemble de nombres aléatoires tirés indépendamment les uns des autres, d'une part pour le deuxième modèle MR2 et d'autre part pour le premier modèle MR1 : il peut s'agir, par exemple, d'un bruit blanc Gaussien ou de nombres uniformes. Il existe donc un nombre aléatoire indépendant par maille du deuxième maillage et par maille du premier maillage. Les nombres alloués au premier modèle MR1 et au deuxième modèle MR2 sont notés respectivement Z1 et Z2.

- A partir d'un simulateur géostatistique choisi, et du jeu de nombres aléatoires Z1, un tirage aléatoire dans la variable aléatoire V1 est effectué, donnant accès à une réalisation (continue ou discrète). La réalisation définit la tendance des variations de V2.

- Enfin, à partir d'un simulateur géostatistique choisi, du jeu de nombres aléatoires Z2 et de la réalisation de V1 générée à la première échelle, un tirage aléatoire dans la variable aléatoire V2 est effectué, donnant accès à une réalisation (continue ou discrète) à deuxième échelle représentant une image possible du réservoir.

Classiquement, le tirage aléatoire est fait dans un cadre hiérarchique. En premier lieu, le modèle de réservoir est peuplé aléatoirement par une réalisation de la fonction aléatoire associée aux faciès, conditionnellement aux mesures de faciès effectuées ponctuellement. Puis, la porosité est générée aléatoirement sur chacun des faciès, conditionnellement aux données de porosité obtenues sur le faciès considéré. Ensuite, on simule la perméabilité horizontale selon sa fonction aléatoire associée, conditionnellement aux faciès et aux porosités tirées précédemment, ainsi qu'aux mesures de perméabilité effectuées sur le terrain. Enfin, on peuple le modèle de réservoir par une réalisation aléatoire de la perméabilité verticale conditionnellement à toutes les simulations précédentes et aux données de perméabilité obtenues ponctuellement.

Le principe de base de la méthode de construction des premier MR1 et deuxième MR2 modèles consiste à simuler d'abord une réalisation de V1 sur le premier maillage, puis de simuler une réalisation de V2 sur le deuxième maillage conditionnellement à la réalisation précédemment simulée sur le premier maillage.

Différentes méthodes peuvent être envisagées à ce stade, parmi lesquelles des techniques de simulation intégrant un cokrigeage pour assurer le conditionnement, des techniques de simulation jointe ou encore des techniques de simulation de processus Gaussiens s'additionnant. Par ces méthodes, il est possible de traiter aussi bien les variables continues que les variables discrètes.

*Pour des variables (paramètres) continues*

Dans un premier temps, on simule sur le premier maillage une réalisation de la variable V1 à partir d'un simulateur géostatistique choisi et du jeu de nombres aléatoires Z1. La deuxième étape concerne la simulation d'une réalisation de V2 conditionnellement à la réalisation générée sur le premier maillage. Les nombres aléatoires sur le deuxième maillage sont Z2.

Selon une première variante de réalisation de l'invention, on peut appliquer une méthode de simulation séquentielle par Gaussiennes avec cokrigeage. Dans ce cas, on réalise les étapes suivantes :

1) on définit un chemin aléatoire pour visiter séquentiellement l'ensemble des mailles du deuxième modèle MR2 et

2) pour chaque maille i de ce chemin,

    a. si la maille i contient une valeur, on passe directement à l'étape b, et si la maille i ne contient pas de valeur,

        i. on identifie le voisinage de la maille dans les premier et deuxième maillages et dans ce voisinage, on reconnaît les mailles possédant des valeurs connues de V2 et/ou V1, il peut s'agir de données issues des données statiques ou de valeurs déjà simulées ;

        ii. on calcule la moyenne m et la variance $\sigma$ de la loi de probabilité conditionnelle en cette maille u à partir d'un cokrigeage simple - elles sont notées $m^{SCK}$ et $\sigma^{2SCK}$, ces valeurs dépendent des mailles voisines $u_i u_j$ dont on connait les valeurs de V1 et/ou V2 :

$$m^{SCK}(\mathbf{u}) = m + \sum_{i=1}^{n_i(\mathbf{u})} \mu_i^{SCK}(\mathbf{u})(V2(\mathbf{u}_i) - m) + \sum_{j=1}^{n_j(\mathbf{u})} v_j^{SCK}(\mathbf{u})(V1(\mathbf{u}_j) - m)$$

$$\sigma^{2\,SCK}(\mathbf{u}) = \sigma^2 - \sum_{k=1}^{n_i(\mathbf{u})+n_j(\mathbf{u})} \lambda_k^{SCK}(\mathbf{u})B(\mathbf{u}_k)$$

avec m, $\mu, v, \lambda$ les poids du krigeage, on les détermine en minimisant la variance de l'erreur (principe du krigeage).

iii. on réalise un tirage aléatoire à partir de cette loi de probabilité conditionnelle et de la valeur de Z2 associée à la maille $i$ et on attribue la valeur ainsi générée à la maille $i$.

b. On passe à la maille suivante du chemin en posant $i = i+1$ et on réitère l'étape a.

La figure 3 illustre des modèles de réservoir obtenus par cette méthode, la variable V simulée est une Gaussienne de moyenne 0,25, de variance 0,05 et de covariance exponentielle isotrope de portée 20m. La figure 3a) représente un premier modèle $MR1_0$ de réservoir (à l'échelle grossière) sur un maillage 10x10. Les figures 3b) à 3d) correspondent à trois réalisations différentes de V pour le deuxième modèle $MR2_0$ de réservoir (à l'échelle fine) sur un maillage 100x100. Ces trois réalisations sont conditionnées par la réalisation simulée du première modèle $MR1_0$ de réservoir. La taille des mailles est respectivement de 1 et 10 m aux deuxième et première échelles. On vérifie que les réalisations simulées à la deuxième échelle sont différentes les unes des autres, mais elles respectent toutes la tendance donnée par la réalisation à l'échelle grossière.

Selon une deuxième variante de réalisation de l'invention, on peut recourir à un processus de simulation jointe pour générer le deuxième modèle $MR2_0$ de réservoir initial connaissant le premier modèle $MR1_0$ de réservoir initial. Dans ce cas, on réalise les étapes suivantes :

1) on calcule les moyenne m et covariance C de V2 connaissant V1, en considérant que la réalisation V1 correspond à la moyenne arithmétique des réalisations de V2 sur les mailles correspondantes.

$$m_{V2|V1} = m + C_{2,1}C_{2,2}^{-1}(V1 - m)$$

$$C_{V2|V1} = C_{2,2} - C_{2,1}C_{2,2}^{-1}C_{1,2}$$

2) on simule une réalisation de cette loi conditionnelle au moyen d'un simulateur géostatistique choisi et du jeu de nombres aléatoires Z2. On attribue les valeurs de la réalisation aux mailles du deuxième modèle $MR2_0$.

Selon une troisième variante de réalisation de l'invention, pour générer le deuxième modèle $MR2_0$ de réservoir initial connaissant le premier modèle $MR1_0$ de réservoir initial, on peut additionner à V1 une variable aléatoire avec les propriétés géostatistiques requises pour que la variable aléatoire en résultant ait les propriétés de V2. Il s'agit d'une méthode dite de processus Gaussien s'additionnant. On définit ainsi une variable aléatoire $\varepsilon$ telle que :

$$V2 = V1 + \varepsilon$$

Les moyenne $m_\varepsilon$ et covariance $C_{\varepsilon\varepsilon}$ de $\varepsilon$ étant données par :

$$m_\varepsilon = \langle \varepsilon \rangle = 0$$

$$C_{\varepsilon\varepsilon} = \langle\varepsilon\varepsilon\rangle = \langle(V2-V1)(V2-V1)\rangle$$
$$= \langle V2V2\rangle - 2\langle V2V1\rangle + \langle V1V1\rangle$$
$$= C_{2,2} - 2C_{2,1} + C_{2,2}$$

Dans ce cas, on simule une réalisation de $\varepsilon$ à partir d'un simulateur géostatistique choisi et du jeu de nombres aléatoires Z2 et pour chaque maille du deuxième maillage on additionne la réalisation de $\varepsilon$ dans cette maille et la réalisation de V1 déjà simulée pour la maille du premier maillage correspondant à la maille considérée.

*Pour des variables (paramètres) discrètes*

Les méthodes envisagées pour le cas des variables continues peuvent se transposer au cas des variables discrètes. Toutefois, quelques adaptations sont nécessaires. On rappelle que la variable V1 correspond à la moyenne arithmétique de V2, le support de la moyenne correspondant à la taille des mailles du premier maillage. Dans le cas des variables discrètes, les réalisations ne peuvent prendre qu'un nombre fini de valeurs comme par exemple 1, 2 ou 3 qui sont les identifiants d'une classe (par exemple, un faciès). On ne peut pas appliquer directement la moyenne arithmétique sur de telles variables. Il faut utiliser comme intermédiaire une variable continue aléatoire.

Des réalisations discrètes peuvent être produites, par exemple, à partir de la méthode des Gaussiennes seuillées. Dans le cas classique avec une seule échelle, la méthode des Gaussiennes seuillées consiste à générer d'abord une réalisation continue normale standard à partir d'un simulateur géostatistique, puis à seuiller cette réalisation en fonction des proportions des différentes classes présentes (ou des différents faciès présents). On obtient alors une réalisation discrète (en faciès).

Dans le contexte à deux échelles on génère une réalisation en faciès à la première échelle et une autre à la deuxième échelle qui suit les tendances imprimées par la réalisation à la première échelle. Pour ce faire, on procède de la manière décrite ci-dessous.

On génère tout d'abord une réalisation continue de V1 à la première échelle à partir d'un simulateur géostatistique choisi et du jeu de nombres aléatoires Z1. V1 est une variable aléatoire continue et normale standard. Puis, connaissant cette réalisation à la première échelle, on génère une réalisation de la variable aléatoire V2 (normale standard et continue) à la deuxième échelle à partir, par exemple de la méthode séquentielle par Gaussiennes avec cokrigeage, et du jeu de nombres aléatoires Z2. On peut alors se référer à la méthode des Gaussiennes seuillées et appliquer un seuillage à la réalisation à la première échelle comme à la réalisation à la deuxième échelle. Pour la deuxième échelle, les seuils sont donnés par :

$$s_i = G^{-1}\left(\sum_{k=1}^{i} p_k\right)$$

où $p_i$ est la proportion du faciès $i$ et $G$ la fonction de répartition de la loi normale standard. Pour la première échelle, on ne peut pas appliquer directement cette formule. En effet, à cette échelle, on travaille sur la moyenne de la variable continue à la deuxième échelle. La prise de moyenne implique une diminution de la variance. On calcule donc la variance à la première échelle ($C_{1,1}(0)$) et on définit de nouveaux seuils à partir de l'inverse de la normale de moyenne nulle et de la variance $C_{1,1}(0)$.

La figure 4 présente un exemple d'application pour un milieu comprenant 3 faciès, de proportions 20%, 30% et 50%. On génère une réalisation à la première échelle dite grossière (figure 4a)) avec un maillage 10x10. Celle-ci est ensuite utilisée pour contraindre la simulation de trois réalisations à la deuxième échelle dite fine (figures 4b) à 4d)) avec un maillage 100x100. Le variogramme de la variable continue à la deuxième échelle est Gaussien, isotrope, de portée 20m. La taille des mailles est respectivement de 1 et 10m pour le deuxième maillage et le premier maillage. Les différences entre ces trois réalisations à la deuxième échelle découlent, d'une part, de ce que les chemins aléatoires pour visiter les mailles de la grille du deuxième modèle diffèrent, et d'autre part, de ce que les bruits blancs Gaussiens générés sur le deuxième maillage ne sont pas les mêmes. On vérifie néanmoins que la répartition des faciès à l'échelle fine suit la tendance donnée par la réalisation à l'échelle grossière.

Étape 2) calage des modèles de réservoir (CAL)

A ce stade, les données dynamiques (DD) n'ont pas été considérées pour construire le modèle de réservoir.

On acquiert donc des données dynamiques en cours d'exploitation du gisement. Il s'agit de données de production, d'essais de puits, de temps de percée, de sismique 4D... dont la particularité est de varier au cours du temps en fonction des écoulements de fluide dans le réservoir

Cette étape est réalisée au moyen d'outils de mesure tels que des débitmètres ou des campagnes sismiques.

Ces données dynamiques vont ensuite être intégrées dans le modèle de réservoir par le biais d'une optimisation ou calage d'historique (CAL). On définit donc une fonction objectif (FOB) mesurant l'écart entre les données dynamiques mesurées (DD) sur le terrain et les réponses correspondantes simulées (SIM) pour le modèle considéré au moyen d'un simulateur d'écoulement. Parmi les simulateurs d'écoulement pouvant être utilisés, on citer le logiciel PumaFlow ® (IFP Énergies nouvelles, France). Le but du processus d'optimisation est de modifier petit à petit ce modèle (MR) pour minimiser la fonction objectif. Pour cela on réitère les étapes de simulation (SIM) et de calcul de la fonction objectif après avoir modifié les modèles de réservoir (MR).

De préférence, la fonction objectif est déterminée par une mesure de type des moindres carrés qui quantifie l'écart entre données et réponses simulées.

Selon l'invention, afin de pouvoir simuler correctement les écoulements dans le réservoir, on réalise une étape de mise à l'échelle ("upscaling") (UPS) du deuxième modèle MR2 de réservoir vers un modèle de réservoir, dit modèle de simulation. Le modèle de simulation comporte un maillage avec un nombre de mailles inférieur au nombre de mailles du deuxième modèle de réservoir et est apte à être utilisé par un simulateur d'écoulement dans un temps réduit. Cela permet notamment de réduire le temps nécessaire au calage du modèle. Lors de la première itération du procédé on réalise la mise à l'échelle pour le deuxième modèle $MR2_0$ initial et pour les autres itérations on se base sur le deuxième modèle MR2 modifié. Cette mise à l'échelle peut être réalisée par toute méthode connue des spécialistes, par exemple par une méthode dite de "upscaling numérique". On note que le modèle de simulation ne correspond pas au premier modèle de réservoir MR1.

La modification des modèles de réservoir (MR1 et MR2) peut concerner un seul modèle ou les deux simultanément. Dans le premier cas, si on modifie seulement le modèle MR1, on remet à jour l'autre modèle MR2 conditionnellement à la modification apportée en conservant les relations entre les premier MR1 et deuxième MR2 modèles de réservoir. De préférence, le procédé selon l'invention utilise pour cette modification des méthodes de déformation géostatistiques comme la méthode des points pilotes, ou la méthode de déformation graduelle ou la méthode de perturbation des probabilités pour modifier les cartes (associées au modèle de réservoir) à l'une des échelles considérées.

Par exemple, pour la méthode de déformation graduelle, on peut réaliser les étapes suivantes :

- Lors de l'étape de génération des modèles de réservoir

   a) on génère deux jeux de nombres aléatoires sur le premier maillage $Z1^A$ et $Z1^B$ ;

   b) on génère deux jeux de nombres aléatoires sur le deuxième maillage $Z2^A$ et $Z2^B$ ;

   c) on définit un paramètre de déformation t1 à la première échelle et on calcule la combinaison $Z1 = \cos(t1)*Z1^A + \sin(t1)*Z1^B$ ;

   d) on définit un paramètre de déformation t2 à la deuxième échelle et on calcule la combinaison $Z2 = \cos(t2)*Z2^A + \sin(t2)*Z2^B$, Z2 et Z1 sont les jeux de nombres aléatoires utilisés pour générer des réalisations des variables V2 et V1 qui permettent d'attribuer des propriétés pétrophysiques au modèle de réservoir ;

- Lors de l'étape de modification des modèles de réservoir

   a) on modifie au moins un des paramètres de déformation (soit t1 seulement, soit t2 seulement, soit les deux simultanément) et on recalcule Z1 et Z2.

Un exemple de déformation graduelle appliquée à l'échelle grossière est illustré par la Figure 5. Cette figure 5 représente les variations du deuxième modèle MR2 lorsqu'on fait varier le premier paramètre de déformation t1. Pour cet exemple, t1 prend successivement les valeurs 1 (figure 5a)), 0,9 (figure 5b)), 0,8 (figure 5c)), 0,7 (figure 5d)) et 0,5 (figure 5e)). Sur ces figures, on remarque l'évolution du modèle en fonction du paramètre de déformation.

Grâce au minimum de la fonction objectif, on détermine le deuxième modèle de réservoir qui est le plus représentatif.

Étape 3) définition de schémas d'exploitation (SE)

A partir du modèle de réservoir déterminé lors des étapes précédentes, les spécialistes peuvent déterminer plusieurs schémas d'exploitation (SE) correspondant à différentes configurations possibles d'exploitation du réservoir souterrain : emplacement des puits producteurs et/ou injecteurs, valeurs cibles pour les débits par puits et/ou pour le réservoir, le type d'outils utilisés, les fluides utilisés, injectés et/ou récupérés... Pour chacun de ces schémas, il convient de déterminer leurs prévisions de production après la période de calage. Ces prévisions de production probabilistes sont obtenues au moyen d'un logiciel de simulation d'écoulement (de préférence le même que celui utilisé auparavant) ainsi qu'au moyen du modèle numérique de réservoir calé.

On définit un ou plusieurs schémas d'exploitation (SE) possibles adapté au modèle de réservoir (appelé également modèle géologique en ce qui concerne le deuxième modèle de réservoir MR2). Pour chacun de ces schémas, on détermine les réponses par simulation.

A partir des prévisions de productions probabilistes définies pour chaque schéma d'exploitation (étape précédente), les spécialistes peuvent par comparaison choisir le schéma d'exploitation qui leur semble le plus pertinent. Par exemple:

- en comparant le maximum du volume d'huile récupéré, on peut déterminer le schéma de production susceptible de fournir le maximum de récupération ou d'être le plus rentable.

- en comparant l'écart type du volume d'huile récupéré, on peut déterminer le schéma de production le moins risqué.

Étape 4) exploitation du réservoir (EX)

On exploite alors le réservoir selon le schéma d'exploitation défini (EX) par exemple en forant de nouveaux puits (producteur ou injecteur), en modifiant les outils utilisés, en modifiant les débits et/ou la nature de fluides injectés...

L'invention concerne par ailleurs un produit programme d'ordinateur téléchargeable depuis un réseau de communication et/ou enregistré sur un support lisible par ordinateur et/ou exécutable par un processeur. Ce programme comprend des instructions de code de programme pour la mise en oeuvre du procédé tel que décrit ci-dessus, lorsque ledit programme est exécuté sur un ordinateur.

Variante de réalisation

La figure 2 représente un deuxième mode de réalisation de l'invention. Sur cette figure, les étapes identiques au premier mode de réalisation conservent les mêmes abréviations. Ce mode de réalisation diffère du précédent en ce qu'on construit le premier modèle de réservoir initial au moyen d'un premier calage d'historique (CAL1). Pour ce premier calage, on réalise les étapes suivantes :

a) on génère de manière stochastique ($MR1^0$) en fonction de données statiques une première version du premier modèle $MR1_0^0$ initial de réservoir au moyen d'un simulateur géostatistique, cette première version comporte également $N_1$ mailles;

b) on simule (SIM1) des données dynamiques au moyen du premier modèle $MR1_0$ initial et d'un simulateur d'écoulement ;

c) on détermine une première fonction objectif (FOB1) mesurant un écart entre des données dynamiques (DD) acquises en cours d'exploitation et des données dynamiques simulées (SIM1), de préférence on choisit la méthode des moindres carrés pour déterminer la fonction objectif ; et

d) on réitère les deux étapes précédentes pour minimiser la fonction objectif après avoir modifié (MR1) le premier modèle $MR1_0$ de réservoir initial, de préférence on modifie ce modèle par une méthode des points pilotes ou par une méthode de déformation graduelle ou par une méthode de perturbation des probabilités.

A partir de ce premier modèle de réservoir $MR1_0$ initial, on génère au moins un deuxième modèle de réservoir $MR2_0$ initial conditionnellement au premier modèle $MR1_0$ initial de manière similaire à l'étape 1) du premier mode de réalisation. Ensuite, les étapes 2) à 4) du premier mode de réalisation sont réalisées de manière identique à ce qui a été décrit ci-dessus.

Ce mode de réalisation permet de faire un calage rapide à la première échelle (grossière) pour pouvoir ensuite sélectionner des modèles initiaux plus intéressants qu'un modèle simulé au hasard. Il en résulte un gain en temps et en performance lors du deuxième calage.

**Revendications**

1. Procédé d'exploitation d'un réservoir géologique selon un schéma d'exploitation défini à partir d'un modèle de réservoir, ledit modèle de réservoir comportant un maillage associé à au moins un paramètre dudit réservoir, dans lequel on mesure des données statiques au sein du réservoir et on acquiert des données dynamiques en cours d'exploitation, dans lequel on réalise les étapes suivantes :

    a) on construit par ordinateur ledit modèle de réservoir au moyen des étapes suivantes :

        i) on génère de manière stochastique en fonction desdites données statiques un premier modèle de réservoir initial $MR1_0$ constitué d'un premier maillage comprenant $N_1$ mailles et au moins un deuxième modèle de réservoir initial $MR2_0$ constitué d'un deuxième maillage comprenant $N_2$ mailles, avec $N_2$ supérieur à $N_1$, la génération stochastique dudit deuxième modèle $MR2_0$ étant contrainte par la génération dudit premier modèle $MR1_0$ ;
        ii) on réalise une mise à l'échelle du deuxième modèle MR2 vers un modèle de réservoir de simulation apte à être utilisé par un simulateur d'écoulement ;
        iii) on détermine une fonction objectif mesurant un écart entre lesdites données dynamiques acquises et des données dynamiques simulées au moyen dudit modèle de réservoir de simulation et d'un simulateur d'écoulement ;
        iv) on réitère les étapes ii) et iii) pour minimiser la fonction objectif après avoir modifié au moins un desdits modèles de réservoir MR1, MR2 et en appliquant la modification audit modèle non modifié ;

    b) on détermine par ordinateur un schéma d'exploitation optimal du réservoir en simulant l'exploitation du réservoir au moyen dudit deuxième modèle de réservoir MR2 et dudit simulateur d'écoulement ; et
    c) on exploite ledit réservoir en mettant en oeuvre ledit schéma d'exploitation optimal.

2. Procédé selon la revendication 1, dans lequel la valeur d'un paramètre en une maille i du premier modèle MR1 de réservoir correspond à la moyenne arithmétique dudit paramètre aux mailles du deuxième modèle MR2 de réservoir correspondant à la maille i du premier modèle de réservoir MR1.

3. Procédé selon l'une des revendications précédentes, dans lequel on génère ledit premier modèle $MR1_0$ au moyen d'un simulateur géostatistique.

4. Procédé selon l'une des revendications 1 ou 2, dans lequel on génère le premier modèle de réservoir initial $MR1_0$, en réalisant les étapes suivantes :

    (1) on génère au moyen d'un simulateur géostatistique une première version du premier modèle de réservoir initial $MR1_0^0$ constitué d'un nombre $N_1$ de mailles ;
    (2) on détermine une fonction objectif mesurant un écart entre des données dynamiques acquises en cours d'exploitation et des données dynamiques simulées au moyen dudit premier modèle $MR1_0$ de réservoir et d'un simulateur d'écoulement ; et
    (3) on réitère l'étape (2) pour minimiser la fonction objectif après avoir modifié ledit modèle de réservoir $MR1_0$.

5. Procédé selon l'une des revendications précédentes, dans lequel on génère ledit deuxième modèle $MR2_0$ de réservoir connaissant le premier modèle $MR1_0$ au moyen d'une simulation géostatistique intégrant un cokrigeage, ou d'une simulation séquentielle par Gaussienne avec cokrigeage, ou d'une méthode de simulations jointes ou d'une technique de processus Gaussien s'additionnant.

6. Procédé selon la revendication 5, dans lequel on génère lesdits premier et deuxième modèles de réservoir pour un paramètre discret, en utilisant en outre une méthode des Gaussiennes seuillées ou une méthode de plurigaussiennes.

7. Procédé selon l'une des revendications 5 ou 6, dans lequel on génère ledit deuxième modèle $MR2_0$ de réservoir connaissant le premier modèle MR10 de réservoir au moyen d'une simulation séquentielle par Gaussienne avec cokrigeage en réalisant les étapes suivantes :

(1) on définit un chemin aléatoire pour visiter séquentiellement l'ensemble des $N_2$ mailles du deuxième maillage ;

(2) on attribue une valeur d'un paramètre pour chaque maille i dudit chemin en réalisant les étapes suivantes :

(a) on se place sur la première maille i dudit chemin ;

(b) on identifie le voisinage de ladite maille i dans les premier $MR1_0$ et deuxième $MR2_0$ modèles, et on détermine pour chaque modèle les mailles voisines dans lesquelles une valeur dudit paramètre a été attribuée ;

(c) on détermine une loi de probabilité conditionnelle dudit paramètre pour la maille i en fonction des valeurs dudit paramètre pour lesdites mailles voisines des premier $MR1_0$ et deuxième $MR2_0$ modèles ;

(d) on attribue une valeur du paramètre à ladite maille i par un tirage aléatoire à partir de ladite loi de probabilité conditionnelle ; et

(e) on passe à la maille suivante dudit chemin et on répète les étapes (b) à (d).

**8.** Procédé selon l'une des revendications 5 ou 6, dans lequel on génère ledit deuxième modèle $MR2_0$ de réservoir connaissant le premier modèle $MR1_0$ de réservoir au moyen d'une simulation jointe en réalisant les étapes suivantes :

(1) on détermine une loi de probabilité conditionnelle du paramètre dans le deuxième modèle $MR2_0$ connaissant la valeur du paramètre dans le premier modèle $MR1_0$; et

(2) on simule une réalisation de ladite loi de probabilité conditionnelle au moyen d'un simulateur géostatistique en chaque maille dudit deuxième maillage.

**9.** Procédé selon l'une des revendications 5 ou 6, dans lequel on génère ledit deuxième modèle $MR2_0$ de réservoir connaissant le premier modèle $MR1_0$ de réservoir au moyen d'une technique de processus gaussien s'additionnant en réalisant les étapes suivantes :

(1) on définit une variable aléatoire $\varepsilon$ liant la réalisation stochastique d'un paramètre pour ledit premier modèle $MR1_0$ à la réalisation stochastique dudit paramètre pour ledit deuxième modèle $MR2_0$ ;

(2) on simule une réalisation de ladite variable aléatoire $\varepsilon$ au moyen d'un simulateur géostatistique ; et

(3) on additionne pour chaque maille i du deuxième maillage de réservoir la valeur de la réalisation de la variable aléatoire $\varepsilon$ en ladite maille i et la valeur du paramètre du premier modèle $MR1_0$ de réservoir pour la maille du premier maillage dans laquelle est incluse ladite maille i.

**10.** Procédé selon la revendication 6, dans lequel on génère lesdits modèles avec des paramètres discrets au moyen d'une méthode de Gaussiennes seuillées en réalisant les étapes suivantes :

(1) on détermine la variance d'un paramètre dans le premier modèle $MR1_0$ de réservoir ;

(2) on définit les seuils du premier modèle $MR1_0$ de réservoir en fonction de ladite variance du paramètre ;

(3) on applique ces seuils à une variable stochastique continue dudit premier modèle de réservoir $MR1_0$ ; et

(4) on applique un seuillage aux valeurs dudit paramètre dans le deuxième modèle $MR2_0$ de réservoir au moyen de seuils définis à partir des proportions dudit paramètre.

**11.** Procédé selon l'une des revendications précédentes, dans lequel on modifie au moins un desdits modèles de réservoir au moyen d'une méthode des points pilotes, ou d'une méthode de déformation graduelle ou d'une méthode de perturbation des probabilités.

**12.** Procédé selon la revendication 11, dans lequel on modifie au moins un desdits modèles de réservoir au moyen d'une méthode de déformation graduelle en réalisant les étapes suivantes :

(1) dans l'étape de génération des modèles de réservoir :

(a) on génère de manière stochastique deux jeux de nombres aléatoires $Z_n^A$, $Z_n^B$ pour chaque modèle n de réservoir ;

(b) on définit un paramètre un paramètre de déformation $t_n$ pour chaque modèle de réservoir ;

(c) on génère chaque modèle de réservoir par combinaison des deux jeux de nombres aléatoires et en fonction dudit paramètre de déformation, de telle sorte que: $Z_{MRn_0} = \cos(t_n)Z_n^A + \sin(t_n)Z_n^B$ avec n l'indice indiquant le modèle de réservoir considéré et Z correspond à l'ensemble des nombres aléatoires d'un modèle, et ;

(2) dans l'étape de modification des modèles de réservoir, on modifie au moins un desdits paramètres de déformation $t_n$ et on construit les modèles de réservoir au moyen dudit paramètre de déformation $t_n$ en appliquant la formule : $Z_{MRn} = \cos(t_n)Z_n^A + \sin(t_n)Z_n^B$.

13. Procédé selon l'une des revendications précédentes, dans lequel la fonction objectif est déterminée au moyen de la méthode des moindres carrés.

14. Procédé selon l'une des revendications précédentes, dans lequel les paramètres incertains pour lesquels on construit le modèle de réservoir sont le faciès et/ou la porosité et/ou la perméabilité horizontale et/ou la perméabilité verticale.

15. Procédé selon la revendication 14, dans lequel on génère les modèles de réservoir pour différentes paramètres en réalisant les étapes suivantes :

(1) on génère de manière stochastique une fonction aléatoire associée au faciès, en fonction de données statiques de mesures de faciès ;
(2) on génère de manière stochastique une fonction aléatoire associée à la porosité, en fonction de données statiques de porosité et à partir de ladite fonction aléatoire de faciès ;
(3) on génère de manière stochastique une fonction aléatoire associée à la perméabilité horizontale, à partir desdites fonctions aléatoires de faciès et de porosité ainsi qu'à partir de données statiques de perméabilité ; et
(4) on génère de manière stochastique une fonction aléatoire associée à la perméabilité verticale, à partir desdites fonctions aléatoires de faciès, de porosité et de perméabilité horizontale ainsi qu'à partir de données statiques de perméabilité.

16. Produit programme d'ordinateur téléchargeable depuis un réseau de communication ou enregistré sur un support lisible par ordinateur ou exécutable par un processeur, comprenant des instructions qui, lorsque le programme est exécuté par un ordinateur, conduisent celui-ci à mettre en oeuvre les étapes a) et b) du procédé selon l'une quelconque des revendications précédentes.


**Patentansprüche**

1. Verfahren zur Nutzung eines geologischen Reservoirs gemäß einem Nutzungsschema, das ausgehend von einem Modell des Reservoirs definiert wird, wobei das Modell des Reservoirs ein Netz umfasst, das mit mindestens einem Parameter des Reservoirs assoziiert ist, wobei statische Daten im Inneren des Reservoirs gemessen werden und dynamische Daten während der Nutzung erfasst werden, wobei die folgenden Schritte durchgeführt werden:

a) das Modell des Reservoirs wird mit einem Computer mit den folgenden Schritten erstellt:

i) als Funktion der statischen Daten wird ein erstes Ausgangsmodell $MR1_0$ des Reservoirs stochastisch generiert, bestehend aus einem ersten Netz, umfassend $N_1$ Maschen, und mindestens ein zweites Ausgangsmodell $MR2_0$ des Reservoirs, bestehend aus einem zweiten Netz, umfassend $N_2$ Maschen, wobei $N_2$ größer ist als $N_1$, wobei die stochastische Generierung des zweiten Modells $MR2_0$ durch die Generierung des ersten Modells $MR1_0$ eingeschränkt wird;
ii) eine Skalierung des zweiten Modells $MR2_0$ zu einem Simulationsmodell des Reservoirs wird durchgeführt, das geeignet ist, von einem Strömungssimulator verwendet zu werden;
iii) eine Zielfunktion wird bestimmt, indem eine Abweichung zwischen den erfassten dynamischen Daten und den simulierten dynamischen Daten mittels des Simulationsmodells des Reservoirs und eines Strömungssimulators gemessen wird;
iv) die Schritte ii) und iii) werden reiteriert, um die Zielfunktion zu minimieren, nachdem mindestens eines der Modelle des Reservoirs MR1, MR2 modifiziert wurde, und indem die Modifikation auf das nicht-modifizierte Modell angewendet wird;

b) mit einem Computer wird ein optimales Nutzungsschema des Reservoirs bestimmt, indem die Nutzung des Reservoirs mittels des zweiten Modells des Reservoirs MR2 und des Strömungssimulators simuliert wird; und
c) das Reservoir wird durch die Durchführung des optimalen Nutzungsschemas genutzt.

**2.** Verfahren nach Anspruch 1, wobei der Wert eines Parameters in einer Masche i des ersten Modells MR1 des Reservoirs dem arithmetischen Mittel des Parameters in den Maschen des zweiten Modells MR2 des Reservoirs entsprechend der Masche i des ersten Modells des Reservoirs MR1 entspricht.

**3.** Verfahren nach einem der vorhergehenden Ansprüche, wobei das erste Modell $MR1_0$ mittels eines geostatistischen Simulators generiert wird.

**4.** Verfahren nach einem der Ansprüche 1 oder 2, wobei das erste Ausgangsmodell $MR1_0$ des Reservoirs generiert wird, indem die folgenden Schritte durchgeführt werden:

(1) mittels eines geostatistischen Simulators wird eine erste Version des ersten Ausgangsmodells des Reservoirs $MR1_0^0$ generiert, bestehend aus einer Anzahl $N_1$ von Maschen;

(2) eine Zielfunktion wird bestimmt, indem eine Abweichung zwischen den während der Nutzung erfassten dynamischen Daten und den simulierten dynamischen Daten mittels des ersten Modells $MR1_0$ des Reservoirs und eines Strömungssimulators gemessen wird; und

(3) der Schritt (2) wird reiteriert, um die Zielfunktion zu minimieren, nachdem das Modell des Reservoirs $MR1_0$ modifiziert wurde.

**5.** Verfahren nach einem der vorhergehenden Ansprüche, wobei das zweite Modell $MR2_0$ des Reservoirs in Kenntnis des ersten Modells $MR1_0$ mittels einer geostatistischen Simulation, die ein Cokriging integriert, oder einer sequentiellen Gaußschen Simulation mit Cokriging oder einer Methode für gemeinsame Simulationen oder einer Technik eines Gaußschen Additionsprozesses generiert wird.

**6.** Verfahren nach Anspruch 5, wobei das erste und zweite Modell des Reservoirs durch einen diskreten Parameter generiert werden, wobei außerdem eine Gaußsche Schwellenmethode oder eine plurigaußsche Methode verwendet wird.

**7.** Verfahren nach einem der Ansprüche 5 oder 6, wobei das zweite Modell $MR2_0$ des Reservoirs in Kenntnis des ersten Modells $MR1_0$ des Reservoirs mittels einer Gaußschen sequentiellen Simulation mit Cokriging generiert wird, indem die folgenden Schritte durchgeführt werden:

(1) ein Zufallsweg wird definiert, um sequentiell die Gesamtheit der $N_2$ Maschen des zweiten Netzes aufzusuchen;

(2) ein Wert eines Parameters für jede Masche i des Wegs wird zugeordnet, indem die folgenden Schritte durchgeführt werden:

(a) eine Platzierung auf die erste Maschine i des Wegs wird vorgenommen;

(b) die Nachbarschaft der Masche i in dem ersten $MR1_0$ und zweiten $MR2_0$ Modell wird identifiziert, und für jedes Modell werden benachbarte Maschen bestimmt, in denen ein Wert des Parameters zugeordnet wurde;

(c) ein bedingtes Wahrscheinlichkeitsgesetz des Parameters für die Masche i wird als Funktion der Werte des Parameters für die benachbarten Maschen des ersten $MR1_0$ und zweiten $MR2_0$ Modells bestimmt;

(d) ein Wert des Parameters wird der Masche i durch das Zufallsprinzip aus dem bedingten Wahrscheinlichkeitsgesetz zugeordnet; und

(e) es wird zur folgenden Masche des Wegs weitergegangen und die Schritte (b) bis (d) werden wiederholt.

**8.** Verfahren nach einem der Ansprüche 5 oder 6, wobei das zweite Modell $MR2_0$ des Reservoirs in Kenntnis des ersten Modells $MR1_0$ des Reservoirs mittels einer gemeinsamen Simulation generiert wird, indem die folgenden Schritte durchgeführt werden:

(1) ein bedingtes Wahrscheinlichkeitsgesetz des Parameters im zweiten Modell $MR2_0$ wird in Kenntnis des Werts des Parameters im ersten Modell $MR1_0$ wird bestimmt; und

(2) eine Anwendung des bedingten Wahrscheinlichkeitsgesetzes mittels eines geostatistischen Simulators wird in jeder Masche des zweiten Netzes simuliert.

**9.** Verfahren nach Ansprüche 5 oder 6, wobei das zweite Modell $MR2_0$ des Reservoirs in Kenntnis des ersten Modells $MR1_0$ des Reservoirs mittels einer Technik eines Gaußschen Additionsprozesses generiert wird, indem die folgenden Schritte durchgeführt werden:

(1) eine Zufallsvariable ε wird definiert, welche die stochastische Realisierung eines Parameters für das erste Modell $MR1_0$ mit der stochastischen Realisierung des Parameters für das zweite Modell $MR2_0$ verbindet;
(2) eine Realisierung der Zufallsvariablen ε mittels eines geostatistischen Simulators wird simuliert;
(3) für jede Masche i des zweiten Netzes des Reservoirs werden der Wert der Realisierung der Zufallsvariablen ε in der Masche i und der Wert des Parameters des ersten Modells $MR1_0$ des Reservoirs für die Masche des ersten Netzes addiert, in der die Masche i enthalten ist.

**10.** Verfahren nach Anspruch 6, wobei die Modelle mit diskreten Parametern mittels einer Gaußschen Schwellenmethode generiert werden, indem die folgenden Schritte durchgeführt werden:

(1) die Varianz eines Parameters im ersten Modell $MR1_0$ des Reservoirs wird bestimmt;
(2) die Schwellen des ersten Modells $MR1_0$ des Reservoirs werden als Funktion der Varianz des Parameters definiert;
(3) diese Schwellen werden auf eine kontinuierliche stochastische Variable des ersten Modells $MR1_0$ des Reservoirs angewendet; und
(4) eine Schwellenwertbestimmung wird auf die Werte des Parameters in dem zweiten Modell $MR2_0$ des Reservoirs mittels Schwellen angewendet, die aus den Proportionen des Parameters definiert werden.

**11.** Verfahren nach einem der vorhergehenden Ansprüche, wobei mindestens eines der Modelle des Reservoirs mittels einer Pilotpunktmethode oder einer allmählichen Deformationsmethode oder einer Wahrscheinlichkeitsperturbationsmethode modifiziert wird.

**12.** Verfahren nach Anspruch 11, wobei mindestens eines der Modelle des Reservoirs mittels einer allmählichen Deformationsmethode modifiziert wird, indem die folgenden Schritte durchgeführt werden:

(1) im Schritt der Generierung der Modelle des Reservoirs:

(a) auf stochastische Weise werden zwei Sätze von Zufallszahlen $Z_n^A$, $Z_n^B$ für jedes Modell n des Reservoirs generiert;
(b) ein Parameter wird als Deformationsparameter $t_n$ für jedes Modell des Reservoirs definiert;
(c) jedes Modell des Reservoirs wird durch Kombination der beiden Sätze von Zufallszahlen und als Funktion des Deformationsparameters derart generiert, dass: $Z_{MRn_0} = \cos(t_n)Z_n^A + \sin(t_n)Z_n^B$, wobei der Index n das betreffende Modell des Reservoirs anzeigt, und Z der Gesamtheit der Zufallszahlen eines Modells entspricht; und

(2) im Schritt der Modifikation der Modelle des Reservoirs mindestens einer der Deformationsparameter $t_n$ modifiziert wird, und die Modelle des Reservoirs mittels des Deformationsparameters $t_n$ durch Anwendung der Formel: $Z_{MRn} = \cos(t_n)\,Z_n^A + \sin(t_n)Z_n^B$ erstellt werden.

**13.** Verfahren nach einem der vorhergehenden Ansprüche, wobei die Zielfunktion mittels der Methode der kleinsten Quadrate bestimmt wird.

**14.** Verfahren nach einem der vorhergehenden Ansprüche, wobei die unbestimmten Parameter, für die das Modell des Reservoirs erstellt wird, die Fazies und/oder die Porosität und/oder die horizontale Permeabilität und/oder die vertikale Permeabilität sind.

**15.** Verfahren nach Anspruch 14, wobei die Modelle des Reservoirs für verschiedene Parameter generiert werden, indem die folgenden Schritte durchgeführt werden:

(1) auf stochastische Weise wird eine Zufallsfunktion, die mit der Fazies assoziiert ist, als Funktion der statischen Daten der Fasziesmessungen generiert;
(2) auf stochastische Weise wird eine Zufallsfunktion, die mit der Porosität assoziiert ist, als Funktion der statischen Daten der Porosität und aus der Zufallsfunktion der Faszies generiert;

(3) auf stochastische Weise wird eine Zufallsfunktion, die mit der horizontalen Permeabilität assoziiert ist, aus den Zufallsfunktionen der Faszies und der Porosität sowie aus den statischen Daten der Permeabilität generiert; und

(4) auf stochastische Weise wird eine Zufallsfunktion, die mit der vertikalen Permeabilität assoziiert ist, aus den Zufallsfunktionen der Faszies, der Porosität und der horizontalen Permeabilität sowie aus den statischen Daten der Permeabilität generiert.

16. Computerprogrammprodukt, welches von einem Kommunikationsnetz heruntergeladen werden kann oder auf einem computerlesbaren Medium gespeichert ist oder durch einen Prozessor ausführbar ist, umfassend Instruktionen, die, wenn das Programm von einem Computer ausgeführt wird, diesen veranlassen, die Schritte a) und b) des Verfahrens nach einem der vorhergehenden Ansprüche durchzuführen.

**Claims**

1. A method of developing a geological reservoir according to a development scheme defined from a reservoir model, said reservoir model comprising a grid pattern associated with at least one parameter of said reservoir, wherein static data is measured within the reservoir and dynamic data is acquired during development, and wherein the following steps are carried out:

   a) constructing, using computer software, said reservoir model by means of the following steps:

   i) generating in a stochastic manner, as a function of said static data, a first initial reservoir model $MR1_0$ consisting of a first grid comprising $N_1$ cells and at least a second initial reservoir model $MR2_0$ consisting of a second grid comprising $N_2$ cells, with $N_2$ greater than $N_1$, the stochastic generation of said second model $MR2_0$ being constrained by the generation of said first model $MR1_0$,
   ii) scaling up the second model MR2 to a simulation reservoir model suited to be used by a flow simulator,
   iii) determining an objective function measuring a difference between said acquired dynamic data and dynamic data simulated using said simulation reservoir model and a flow simulator,
   iv) repeating steps ii) and iii) in order to minimize the objective function after modifying at least one of said reservoir models MR1, MR2 and by applying the modification to said non-modified model,

   b) determining, using computer software, an optimum development scheme by simulating the development of the reservoir using said second reservoir model MR2 and said flow simulator, and
   c) developing said reservoir by implementing said optimum development scheme.

2. A method as claimed in claim 1, wherein the value of a parameter in a cell i of first reservoir model MR1 corresponds to the arithmetic mean of said parameters in the cells of second reservoir model MR2 corresponding to cell i of first reservoir model MR1.

3. A method as claimed in any one of the previous claims, wherein said first model $MR1_0$ is generated using a geostatistical simulator.

4. A method as claimed in any one of claims 1 or 2, wherein first initial reservoir model $MR1_0$ is generated by carrying out the following steps:

   (1) generating, by means of a geostatistical simulator, a first version of first initial reservoir model $MR1_0$ consisting of a number $N_1$ of cells,
   (2) determining an objective function measuring a difference between dynamic data acquired during development and dynamic data simulated using said first reservoir model $MR1_0$ and a flow simulator, and
   (3) repeating step (2) in order to minimize the objective function after modifying said reservoir model $MR1_0$.

5. A method as claimed in any one of the previous claims, wherein said second reservoir model $MR2_0$ is generated knowing first model $MR1_0$, by means of a geostatistical simulation including cokriging or of a sequential Gaussian simulation with cokriging, or of a joint simulation method or an additive Gaussian process technique.

6. A method as claimed in claim 5, wherein said first and second reservoir models are generated for a discrete parameter, further using a thresholded Gaussian method or a pluriGaussian method.

**7.** A method as claimed in any one of claims 5 or 6, wherein said second reservoir model $MR2_0$ is generated knowing first reservoir model $MR1_0$, by means of a sequential Gaussian simulation with cokriging, by carrying out the following steps:

> (1) defining a random path for sequentially visiting all of the $N_2$ cells of the second grid,
> (2) assigning a value of a parameter for each cell i of said path by carrying out the following steps:
>
>> (a) considering first cell i of said path,
>> (b) identifying the neighbourhood of said cell i in the first $MR1_0$ and second $MR2_0$ models, and determining for each model the neighbour cells in which a value of said parameter has been assigned,
>> (c) determining a conditional probability low of said parameter for cell i as a function of the values of said parameter for said neighbour cells of the first $MR1_0$ and second $MR2_0$ models,
>> (d) assigning a value of the parameter to said cell i by random draw from said conditional probability law, and
>> (e) moving to the next cell of said path and repeating steps (b) to (d).

**8.** A method as claimed in any one of claims 5 or 6, wherein said second reservoir model $MR2_0$ is generated knowing first reservoir model $MR1_0$, by means of a joint simulation, by carrying out the following steps:

> (1) determining a conditional probability low of the parameter in second model $MR2_0$, knowing the value of the parameter in first model $MR1_0$, and
> (2) simulating a realization of said conditional probability low using a geostatistical simulator in each cell of said second grid.

**9.** A method as claimed in any one of claims 5 or 6, wherein said second reservoir model $MR2_0$ is generated knowing first model $MR1_0$, by means of an additive Gaussian process technique, by carrying out the following steps:

> (1) defining a random variable $\varepsilon$ relating the stochastic realization of a parameter for said first model $MR1_0$ to the stochastic realization of said parameter for said second model $MR2_0$,
> (2) simulating a realization of said random variable $\varepsilon$ using a geostatistical simulator, and
> (3) adding for each cell i of the second reservoir grid the value of the realization of random variable $\varepsilon$ in said cell i to the value of the parameter of first reservoir model $MR1_0$ for the cell of the first grid in which said cell i is included.

**10.** A method as claimed in claim 6, wherein said models are generated with discrete parameters using a thresholded Gaussian method, by carrying out the following steps:

> (1) determining the variance of a parameter in first reservoir model $MR1_0$,
> (2) defining the thresholds of first reservoir model $MR1_0$ as a function of said variance of the parameter,
> (3) applying these thresholds to a continuous stochastic variable of said first reservoir model $MR1_0$, and
> (4) applying thresholding to the values of said parameter in second reservoir model $MR2_0$ by means of thresholds defined from the proportions of said parameter.

**11.** A method as claimed in any one of the previous claims, wherein at least one of said reservoir models is modified by means of a pilot point method, a gradual deformation method or a probability perturbation method.

**12.** A method as claimed in claim 11, wherein at least one of said reservoir models is modified by means of a gradual deformation method by carrying out the following steps:

> (1) in the reservoir model generation step:
>
>> (a) generating in a stochastic manner two sets of random numbers $Z_n^A$, $Z_n^B$ for each reservoir model n,
>> (b) defining a deformation parameter $t_n$ for each reservoir model,
>> (c) generating each reservoir model by combining the two sets of random numbers and as a function of said deformation parameter, so that: $Z_{MRn0} = cos(t_n)Z_n^A + sin(t_n)Z_n^B$, with n the subscript indicating the reservoir model considered and Z corresponds to all of the random numbers of a model, and

(2) in the reservoir model modification step, modifying at least one of said deformation parameters $t_n$ and constructing the reservoir models by means of said deformation parameter $t_n$ by applying the formula:

$$Z_{MRn} = cos(t_n)Z_n^A + sin(t_n)Z_n^B.$$

13. A method as claimed in any one of the previous claims, wherein the objective function is determined using the least squares method.

14. A method as claimed in any one of the previous claims, wherein the uncertain parameters for which the reservoir model is constructed are the facies and/or the porosity and/or the horizontal permeability and/or the vertical permeability.

15. A method as claimed in claim 14, wherein the reservoir models are generated for various parameters by carrying out the following steps:

(1) generating in a stochastic manner a random function associated with the facies, as a function of static facies measurement data,
(2) generating in a stochastic manner a random function associated with the porosity, as a function of static porosity data and from said random facies function,
(3) generating in a stochastic manner a random function associated with the horizontal permeability, from said random facies and porosity functions, and from static permeability data, and
(4) generating in a stochastic manner a random function associated with the vertical permeability, from said random facies, porosity and horizontal permeability functions, and from static permeability data.

16. A computer program product downloadable from a communication network and/or recorded on a computer readable medium and/or processor executable, comprising instructions which, when the program is executed by a computer, cause the latter to implement steps a) and b) of the method as claimed in any one of the previous claims.

**Figure 1**

**Figure 2**

Figure 3a)

Figure 3b)

Figure 3c)

Figure 3d)

Figure 4a)

Figure 4b)

Figure 4c)

Figure 4d)

Figure 5a)     Figure 5b)     Figure 5c)

Figure 5d)     Figure 5e)

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1637904 A

- GB 2390714 A

**Littérature non-brevet citée dans la description**

- **GOOVAERTS,P.** Geostatistics for natural resources evaluation. Oxford Press, 1997, 483
- **LE RAVALEC, M. ; NOETINGER B. ; HU L.-Y.** The FFT moving average (FFT-MA) generator: an efficient numerical method for generating and conditioning Gaussian simulations. *Mathematical Geology,* 2000, vol. 32 (6), 701-723
- **RAMARAO, B.S ; LAVENUE, A.M. ; MARSILLY, G. DE ; MARIETTA, M.G.** Pilot point methodology for automated calibration of an ensemble of conditionally simulated transmissivity fields. 1. Theory and computational experiments. *WRR,* 1995, vol. 31 (3), 475-493
- **GOMEZ-HERNANDEZ, J. ; SAHUQUILLO, A. ; CAPILLA, J.E.** Stochastic simulation of transmissivity fields conditional to both transmissivity and piezometric data, 1. Theory. *J. of Hydrology,* 1997, vol. 203, 162-174

- **HU, L-Y.** Graduai Déformation and iterative calibration of Gaussian-related stochastic models. *Math. Geol.,* 2000, vol. 32 (1), 87-108
- **CAERS, J.** Geostatistical history matching under training-image based geological constraints. *SPE J.,* 2003, vol. 8 (3), 218-226
- **TRAN, T.T. ; WEN, X.-H. ; BEHRENS, R.A.** Efficient conditioning of 3D fine-scale reservoir model to multiphase production data using streamline-based coarse-scale inversion and geostatistical downscaling. *SPE ATCE,* 1999
- **AANONSEN, S.I. ; EYDINOV, D.** A multiscale method for distributed parameter estimation with application to reservoir history matching. *Comput. Geosci.,* 2006, vol. 10, 97-117